(19) Europäisches Patentamt / European Patent Office / Office européen des brevets

(11) **EP 3 256 921 B1**

(12) **EUROPÄISCHE PATENTSCHRIFT**

(45) Veröffentlichungstag und Bekanntmachung des Hinweises auf die Patenterteilung:
**20.01.2021 Patentblatt 2021/03**

(21) Anmeldenummer: **16716524.0**

(22) Anmeldetag: **07.04.2016**

(51) Int Cl.:
**G05B 19/418** (2006.01)

(86) Internationale Anmeldenummer:
**PCT/EP2016/057558**

(87) Internationale Veröffentlichungsnummer:
**WO 2016/166001 (20.10.2016 Gazette 2016/42)**

(54) **BEARBEITUNGSSYSTEM SOWIE VERFAHREN, STEUERVORRICHTUNG UND COMPUTERPROGRAMMPRODUKT ZUR STEUERUNG EINES BEARBEITUNGSSYSTEMS MIT EINER WERKZEUGMASCHINE**

MACHINING SYSTEM AND METHOD, CONTROL DEVICE AND COMPUTER PROGRAM PRODUCT FOR CONTROLLING A MACHINING SYSTEM WITH A MACHINE TOOL

SYSTÈME ET PROCÉDÉ D'USINAGE, DISPOSITIF DE COMMANDE ET PRODUIT-PROGRAMME INFORMATIQUE POUR LA COMMANDE D'UN SYSTÈME D'USINAGE COMPORTANT UNE MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2015 DE 102015206742**
**29.05.2015 DE 102015209924**

(43) Veröffentlichungstag der Anmeldung:
**20.12.2017 Patentblatt 2017/51**

(73) Patentinhaber: **Siemens Aktiengesellschaft**
**80333 München (DE)**

(72) Erfinder:
• **ROYER, Christian**
**85521 Ottobrunn (DE)**
• **PFAFFINGER, Alexander**
**81739 München (DE)**
• **HINTZ, Tobias**
**64385 Reichelsheim (DE)**

(56) Entgegenhaltungen:
**EP-A1- 2 724 797**

• **Anonym: "Stanztechnologie kompakt", TRUMPF GmbH + Co. KG , 13. März 2015 (2015-03-13), XP002759540, Gefunden im Internet: URL:http://www.at.trumpf.com/de/produkte/werkzeugmaschinen/produkte/stanzen/automatisierung.html [gefunden am 2016-07-05] -& Anonym: "Automatisierung von Stanz- und Stanz-Laser-Maschinen", TRUMPF GmbH + Co. KG , XP002759541, Gefunden im Internet: URL:http://web.archive.org/web/20150313150312/http://www.at.trumpf.com/de/produkte/werkzeugmaschinen/produkte/stanzen/automatisierung.html [gefunden am 2015-07-05]**
• **AVCI S ET AL: "TOOL MAGAZINE ARRANGEMENT AND OPERATIONS SEQUENCING ON CNC MACHINES", EUROPEAN JOURNAL OF ENGINEERING EDUCATION, XX, XX, Bd. 23, Nr. 11, 1. November 1996 (1996-11-01), Seiten 1069-1081, XP000609207,**
• **AKTURK M S ET AL: "Joint lot sizing and tool management in a CNC environment", COMPUTERS IN INDUSTRY, ELSEVIER SCIENCE PUBLISHERS. AMSTERDAM, NL, Bd. 40, Nr. 1, 1. September 1999 (1999-09-01), Seiten 61-75, XP004178451, ISSN: 0166-3615, DOI: 10.1016/S0166-3615(98)00143-2**

- GRANGER C: "SOFTWARE STRATEGIES FOR CELL MANAGEMENT", MACHINERY AND PRODUCTION ENGINEERING, MACHINERY PUBLISHING CO.LTD. BURGESS HILL, GB, Bd. 148, Nr. 3789, 7. September 1990 (1990-09-07), Seite 32/33,35, XP000151253, ISSN: 0024-919X

- KOHLHASE M: "FLEXIBLE MACHINING OF LARGE CASTINGS", INDUSTRIAL AND PRODUCTION ENGINEERING, CARL HANSER VERLAG. MUNCHEN, DE, Bd. 14, Nr. 1, 1. März 1990 (1990-03-01), Seiten 36-40, XP000179531, ISSN: 0343-334X

**Beschreibung**

Aus "Stanztechnologie kompakt" Trumpf GmbH & Co. KG, XP002759540, ist ein Verfahren zur Steuerung einer Werkzeugmaschine bekannt, wobei die Werkzeugmaschine ein erstes und ein zweites Werkzeugmagazin aufweist. Ein Werkzeug zur Bearbeitung eines Werkstücks kann vom ersten Werkzeugmagazin aufgenommen werden und es kann ein Werkzeug aus dem zweiten Werkzeugmagazin in das erste Werkzeugmagazin übernommen werden. Weiterhin kann eines der Werkzeuge ein Mehrfachwerkzeug umfassen, das vor der Bearbeitung mit mehreren Werkzeugen bestückbar ist.

In "Tool Magazine Arrangement And Operations Sequencing On CNC Machines", AVCI S et al, European Journal of Engineering Education, Band 23, Nr. 11, Seiten 1069-1081, XP000609207, ist eine Werkzeugwechselstrategie beschrieben, bei der für die Bearbeitung von Werkzeugen eine Summe bestehend aus einer ersten Komponente und einer zweiten Komponente maximiert wird. Die erste Komponente zählt für die möglichen Werkzeugbearbeitungen eine Summe aus einer binären Variablen, wobei die binäre Variable den Wert 1 aufweist, wenn für aufeinander folgende Bearbeitungsschritte das gleiche Werkzeug von der Werkzeugmaschine benutzt wird. Die zweite Komponente zählt die Anzahl der unbenutzten Werkzeuge. Mit diesem Verfahren soll die Anzahl der Werkzeugwechsel in den Werkzeugmagazinen reduziert werden.

Die vorliegende Erfindung betrifft ein Verfahren zur Steuerung einer Werkzeugmaschine gemäß Anspruch 1, ein Computerprogrammprodukt mit Programmcodemitteln zur Durchführung des Verfahrens gemäß Anspruch 7, eine Steuervorrichtung für eine Werkzeugmaschine gemäß Anspruch 8 sowie ein Bearbeitungssystem, umfassend eine Werkzeugmaschine, gemäß Anspruch 9.

Eine Werkzeugmaschine ist dazu eingerichtet, ein Werkstück mittels unterschiedlichen Werkzeugen nacheinander zu bearbeiten. Insbesondere kann die Werkzeugmaschine eine Stanzmaschine umfassen, die ein flächiges Werkstück wie ein Blech bearbeitet. Dazu kann die Werkzeugmaschine ein Werkzeugmagazin mit Stellplätzen für eine vorbestimmte Anzahl von Werkzeugen umfassen. Die Werkzeugmaschine kann eines der Werkzeuge aus dem Werkzeugmagazin aufnehmen und damit einen oder mehrere Bearbeitungsschritte an dem Werkstück durchführen.

Es kann auch ein sogenanntes Mehrfachwerkzeug (Multitool) vorgesehen sein, das seitens des Werkzeugmagazins wie ein normales Werkzeug behandelt wird, das aber mit beispielsweise bis zu fünf oder bis zu zehn einzelnen Werkzeugen bestückt werden kann, die dann zur Bearbeitung der Werkstücke zur Verfügung stehen.

Außerdem können zwei Werkzeugmagazine gestaffelt werden, wobei die Werkzeugmaschine relativ schnell auf ein Werkzeug aus dem ersten Werkzeugmagazin zugreifen kann. Soll ein Werkzeug verwendet werden, das sich nicht im ersten Werkzeugmagazin befindet, so kann dieses aus dem zweiten Werkzeugmagazin ins erste übernommen werden. Dabei kann gleichzeitig ein anderes Werkzeug vom ersten ins zweite Werkzeugmagazin zurückgelegt werden. Ein solcher Zugriff dauert jedoch relativ lange, beispielsweise ca. 20 - 30 Sekunden, und ist üblicherweise nicht nur bei der Bearbeitung eines Werkstücks, sondern bei der Bearbeitung jedes Werkstücks eines Auftrags gleichartiger Werkstücke durchzuführen. Durch die Verwendung von Multitools kann die Kapazität des ersten Werkzeugmagazins vergrößert werden, sodass weniger häufige Werkzeugwechsel zwischen dem ersten und dem zweiten Werkzeugmagazin erforderlich sein können.

Der Erfindung liegt die Aufgabe zugrunde, den Einsatz von Mehrfachwerkzeugen in einem Werkzeugmagazin einer Werkzeugmaschine zu verbessern. Die Erfindung löst diese Aufgabe mittels der Gegenstände der unabhängigen Ansprüche. Unteransprüche geben bevorzugte Ausführungsformen wieder.

Eine Werkzeugmaschine umfasst ein erstes und ein zweites Werkzeugmagazin, wobei ein Werkzeug zur Bearbeitung eines Werkstücks vom ersten Werkzeugmagazin aufgenommen werden kann und ein Werkzeug aus dem zweiten Werkzeugmagazin in das erste Werkzeugmagazin übernommen werden kann, und wobei eines der Werkzeuge ein Mehrfachwerkzeug umfasst, das vor der Bearbeitung mit mehreren Werkzeugen bestückbar ist. Ein Verfahren zur Steuerung einer Werkzeugmaschine umfasst Schritte des Erfassens von zu bearbeitenden Werkstücken, des Bestimmens von Werkzeugen, die zur Bearbeitung der erfassten Werkstücke erforderlich sind und des Bestimmens von Werkzeugen, mit denen das Mehrfachwerkzeug bestückt werden soll. Dabei werden die Werkzeuge derart bestimmt, dass über alle zu bearbeitenden Werkstücke die gewichtete Summe $1 * LC + w * TP$ minimiert ist, wobei LC die Anzahl der für die Bearbeitung des Werkstücks aus dem zweiten ins erste Werkzeugmagazin übernommenen Werkzeuge, TP die Anzahl der für die Bearbeitung des Werkstücks in einem der Werkzeugmagazine aufzurüstenden Werkzeuge, und 1 und w vorbestimmte Gewichtungsfaktoren sind.

Durch das bestimmte Kriterium können die für das Mehrfachwerkzeug zu verwendenden Werkzeuge einfach und sicher bestimmt werden. Dabei kann beispielsweise ein mathematisches Optimierungsverfahren verwendet werden, wobei das genannte Kriterium einfach im Optimierungsverfahren ausgedrückt und zuverlässig gebildet werden kann. Bevorzugterweise werden die Werkzeuge für die Mehrfachwerkzeuge mittels Methoden der gemischt ganzzahligen Programmierung (MIP) gebildet.

Die oben angegebene Summe kann auch mit gleichen Gewichtungsfaktoren 1 und w gebildet werden und insbesondere können beide Gewichtungsfaktoren Eins sein, sodass praktisch eine ungewichtete Summe verwendet wird. In noch einer weiteren Ausführungsform ist einer der beiden Gewichtungsfaktoren Null, sodass eine Optimierung nur nach dem anderen Kriterium erfolgt. Es können auch mehrere Mehrfachwerkzeuge vorgesehen sein, deren Werkzeuge wie angegeben bestimmt werden können. Fassungskapazitäten der Mehrfachwerkzeuge für Werkzeuge können gleich oder unterschiedlich sein. Es kann auch berücksichtigt werden, welches der Werkzeuge in welchem Mehrfachwerkzeug verwendet werden darf. Das Optimierungskriterium kann dabei unverändert bleiben. Die bestimmte Zuordnung von Werkzeugen zu Mehrfachwerkzeugen kann so verbessert an der Werkzeugmaschine umgesetzt werden.

Das Bestimmen kann auch ein Zuordnen von Werkzeugen oder Mehrfachwerkzeugen zu den Werkzeugmagazinen umfassen. Nach dem Bestimmen werden üblicherweise die Werkzeuge in den Mehrfachwerkzeugen und/oder den Werkzeugmagazinen gerüstet, bevor Werkstücke mittels der Werkzeugmaschine bearbeitet werden. Das Bearbeiten kann ebenfalls durch das Verfahren gesteuert werden.

In einer Variante besteht die Möglichkeit, zwei oder mehr gleiche Werkzeuge auf verschiedenen Mehrfachwerkzeugen zu rüsten. Dabei wird das Bearbeiten eines Werkstücks derart gesteuert, dass jeweils nur eines der gleichen Werkzeuge verwendet wird. Jeder Arbeitsgang an diesem Werkstück mit einem der gleichen Werkzeuge wird dann mit demselben Werkzeug durchgeführt. Dadurch lassen sich unter Umständen zusätzlich Werkzeugwechsel einsparen.

In einer anderen Variante wird davon ausgegangen, dass ein Werkzeug höchstens auf einem Mehrfachwerkzeug gerüstet werden darf. Ist für ein Werkstück ein Werkzeug eines Mehrfachwerkzeugs verwendbar, so wird dieses Mehrfachwerkzeug vorzugsweise auch dafür verwendet.

In beiden Varianten kann eine Menge von Mehrfachwerkzeugen mit bereits gerüsteten Werkzeugen berücksichtigt werden. In der ersten Variante kann zusätzlich der Einsatz von bestehenden Mehrfachwerkzeugen für Typen von Werkstücken verboten werden, für die sie aktuell nicht eingesetzt werden. Dadurch kann erreicht werden, dass nicht unnötigerweise Werkzeuge aus neuen Mehrfachwerkzeugen verwendet werden und die Anzahl der zu ändernden Produktionsprogramme kann gering gehalten werden.

Ein Computerprogrammprodukt umfasst Programmcodemittel zur Durchführung des oben beschriebenen Verfahrens, wenn es auf einer Ausführungseinrichtung abläuft oder auf einem computerlesbaren Medium gespeichert ist.

Eine Steuervorrichtung für die oben beschriebene Werkzeugmaschine ist dazu eingerichtet, die Schritte des oben beschriebenen Verfahrens durchzuführen.

Ein Bearbeitungssystem umfasst die oben beschriebene Werkzeugmaschine sowie die oben beschriebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

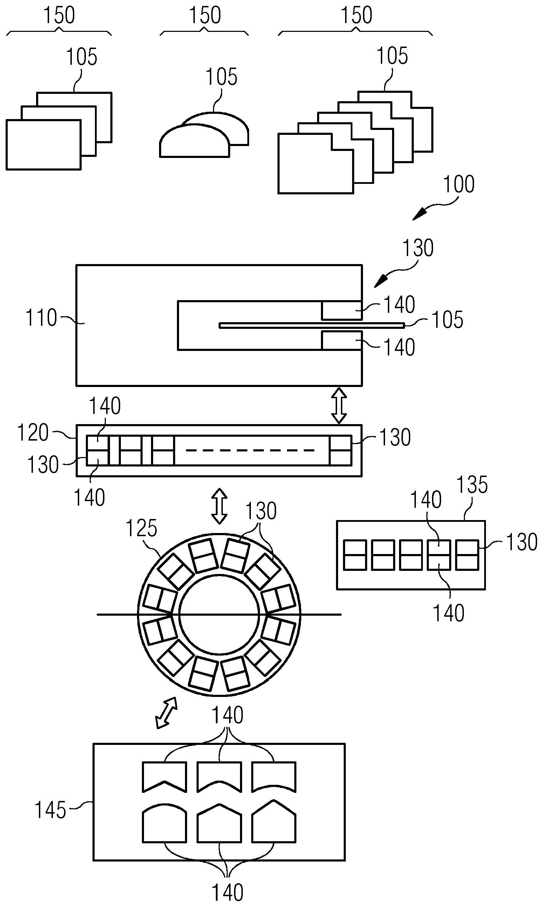

FIG 1 ein Bearbeitungssystem mit einer Werkzeugmaschine darstellt.

Genaue Beschreibung von Ausführungsbeispielen

FIG 1 zeigt ein Bearbeitungssystem 100 zur Bearbeitung von Werkstücken 105. Das Bearbeitungssystem 100 umfasst eine Werkzeugmaschine 110 mit einer Steuervorrichtung 115. Die Werkzeugmaschine kann insbesondere eine Stanzmaschine umfassen, beispielsweise eine Trumatic 5000 oder Trumatic 7000.

Die Werkzeugmaschine 110 umfasst ein erstes Werkzeugmagazin 120 (Linearmagazin) und optional ein zweites Werkzeugmagazin 125 (Rundmagazin, Toolmaster), jeweils zur Aufnahme einer vorbestimmten Anzahl Werkzeuge 130. Handelt es sich bei der Werkzeugmaschine 110 beispielsweise um eine Trumatic 5000, so liegt die Fassungskapazität des ersten Werkzeugmagazins 120 derzeit bei 21 und die des zweiten Werkzeugmagazins 125 bei 50 Werkzeugen 130. Bei der Trumatic 7000 fasst das erste Werkzeugmagazin 120 derzeit 25 und das zweite Werkzeugmagazin 125 70 Werkzeuge 130.

Die Werkzeugmaschine 110 ist dazu eingerichtet, ein Werkstück 105 mittels eines oder mehrerer Werkzeuge 130 zu bearbeiten, die sie selbsttätig nacheinander aus dem ersten Werkzeugmagazin 120 aufnehmen kann. Ein solcher Werkzeugwechsel läuft relativ schnell ab, üblicherweise sind dafür ca. 1 - 10 Sekunden zu veranschlagen. Aus dem zweiten Werkzeugmagazin 125 kann ein Werkzeug 130 ins erste Werkzeugmagazin 120 übernommen werden, wobei üblicherweise dabei ein anderes Werkzeug 130 vom ersten Werkzeugmagazin 120 ins zweite 125 zurückgestellt wird. Dieser Vorgang dauert üblicherweise erheblich länger, beispielsweise ca. 20 - 30 Sekunden, und wird auch Linearmagazinwechsel genannt.

Soll ein Werkstück 105 bearbeitet werden, das mehr Werkzeuge 130 erfordert als im ersten Werkzeugmagazin 120 gehalten werden können, ist ein solcher Wechsel erforderlich. Werden nacheinander mehrere gleichartige Werkstücke 105 bearbeitet, so muss dieser Wechsel - und gegebenenfalls ein entsprechender Rückwechsel - für jedes einzelne Werkstück 105 durchgeführt werden.

Das zweite Werkzeugmagazin 125 kann dazu eingerichtet sein, während des Bearbeitens eines Werkstücks 105 mittels der Werkzeugmaschine 110 mit Werkzeugen 130 nach- bzw. umgerüstet zu werden, wobei einzelne Werkzeuge 130 aus dem zweiten Werkzeugmagazin 125 entnommen oder hinzugefügt werden können. Das zweite Werkzeugmagazin 125 kann beispielsweise kreisförmig organisiert sein, wobei in einem ersten Kreissegment eine Nach- oder Umrüstung vorgenommen werden, und in einem zweiten, davon verschiedenen Kreissegment ein Austausch von Werkzeugen 130 mit dem ersten Werkzeugmagazin 120 erfolgen kann.

Zur Einsparung von für Werkzeuge 130 vorgesehenen Plätzen in den Werkzeugmagazinen 120, 125 können Mehrfachwerkzeuge 135 (Multitools) vorgesehen sein, die seitens der Werkzeugmagazine 120, 125 jeweils nur den Platz eines einzigen Werkzeugs 130 belegen, ihrerseits jedoch mehrere Werkzeuge 130 aufnehmen können. Dabei ist die Aufnahmekapazität der Mehrfachwerkzeuge 135 ebenfalls begrenzt, es können beispielsweise Mehrfachwerkzeuge 135 für maximal fünf oder maximal zehn Werkzeuge 130 vorgesehen sein.

Häufig sind wegen ihrer Abmessungen nicht alle Werkzeuge 130 zur Aufnahme in einem Multiwerkzeug 135 geeignet. Die Verwendbarkeit eines Werkzeugs 130 in einem Mehrfachwerkzeug 135 kann sich nach der Packungsdichte von Werkzeugen 130 im Mehrfachwerkzeug 135 richten, sodass ein Werkzeug 130, das in einem 10-fach Multiwerkzeug 135 gerüstet werden kann, üblicherweise auch in einem 5-fach Multiwerkzeug 135 gerüstet werden kann, umgekehrt aber möglicherweise nicht.

Einige der Werkzeuge 130 können aus zwei oder mehr Teilen 140 bestehen. Beispielsweise kann für einen Stanz-, Präge- oder Tiefziehvorgang ein Teil 140 eine Matrize und ein anderes Teil 140 einen Stempel umfassen. Für einen vorbestimmten Bearbeitungsvorgang an einem Werkstück 105 kann das benötigte Werkzeug 130 beispielsweise in Abhängigkeit der Materialstärke des Werkstücks 105 unterschiedliche Teile 140 erfordern, um eine vorbestimmte Schnittluft sicher zu stellen. Die Schnittluft hängt von einem Abstand zwischen den Teilen 140 des Werkzeugs 130 ab, in dem das Werkstück 105 bei der Bearbeitung liegt. Ein Werkzeug 130 kann auch für einen Bereich von Parametern verwendet werden, beispielsweise für Werkstücke 105 mit einer Materialstärke von ca. 0,8 bis 1,5 mm. Es können auch in Abhängigkeit des Materials oder eines anderen Parameters des Werkstücks 105 unterschiedliche Teile 140 benötigt werden, um ein passendes Werkzeug 130 zu bilden.

Die einzelnen Teile 140 können in einem Bestand 145 vorgehalten werden, der beispielsweise als Lagersystem realisiert ist. Werden im Bestand 145 auch fertig montierte Werkzeuge 130 vorgehalten, muss beim Aufrüsten der Werkzeugmagazine 120, 125 mit Werkzeugen 130 nur ein Teil davon zuvor montiert werden.

Um ein Werkzeug 130 in einem der Werkzeugmagazine 120, 125 oder in einem Mehrfachwerkzeug 135 aufzurüsten müssen üblicherweise alle dafür erforderlichen Teile 140 bestimmt und aus dem Bestand 145 beschafft werden; anschließend müssen die Teile 140 zum Werkzeug 130 zusammengefügt werden, was allgemein manuell durchgeführt wird. Üblicherweise muss beim Aufrüsten eines Werkzeugs 130 auch ein anderes abgerüstet werden, um Platz im Werkzeugmagazin 120, 125 bzw. dem Mehrfachwerkzeug 135 zu schaffen. Ein abgerüstetes Werkzeug 130 wird üblicherweise wieder in seine Teile 140 zerlegt und die Teile 140 werden in den Bestand 145 zurückgeführt. Das Abrüsten kann auch als Teil des Aufrüstens verstanden werden. Der gesamte Vorgang wird auch Werkzeugvorbereitung oder Einzelwerkzeugvorbereitung genannt und kann in einem dedizierten Vorrüstbereich stattfinden, der üblicherweise weiter von der Werkzeugmaschine 110 entfernt ist als das zweite Werkzeugmagazin 125. Das Bereitstellen eines Werkzeugs 130 aus Teilen 140 des Bestands 145 ist zeit- und arbeitsintensiv. Die Bereitstellung eines Werkzeugs dauert üblicherweise mehrere Minuten bis mehrere zehn Minuten.

Die Werkzeugmaschine 110 wird üblicherweise nicht nur verwendet, um einzelne Werkstücke 105 zu bearbeiten, sondern Aufträge 150, wobei jedem Auftrag 150 eine Stückzahl gleichartiger Werkstücke 105 zugeordnet ist, die auf die gleiche Weise, also jeweils unter Verwendung der gleichen Werkzeuge 130, bearbeitet werden. Für eine Fertigung eines einzelnen Werkstücks 105 kann die Stückzahl des zugehörigen Auftrags 150 auch gleich Eins sein. Werkstücke 105 eines Auftrags 150 werden üblicherweise nacheinander bearbeitet, ohne dass die Menge der gerüsteten Werkzeuge 130 geändert wird.

Aufträge 150 bzw. Werkstücke 105, die ohne Änderung der in den Werkzeugmagazinen 120, 125 gerüsteten Werkzeuge 130 mittels der Werkzeugmaschine 110 bearbeitet werden können, können Rüstfamilie 155 genannt werden. Die Menge der dabei gerüsteten Werkzeuge 130 wird auch Rüstung 160 genannt.

Zur Bearbeitung von Werkstücken 105 kann eine Fördereinheit (nicht dargestellt) vorgesehen sein, die unbearbeitete Werkstücke 105 automatisch nacheinander in die Werkzeugmaschine 110 fördert und/oder bearbeitete Werkstücke 105 entnimmt. Die Werkzeugmaschine 110 kann dadurch längerfristig unbeaufsichtigt arbeiten.

Gedanke der Erfindung ist, die Werkzeuge 130, die in einem Multiwerkzeug 135 gerüstet werden, so zu wählen, dass die Werkzeugmaschine 110 möglichst effizient betrieben werden kann und Auf- oder Umrüstvorgänge der Werkzeugmagazine 120, 125 möglichst minimiert sind. Dazu soll insbesondere die Zuordnung von Werkzeugen 130 auf Mehrfachwerkzeuge 135 mittels Methoden der Ganzzahligen oder Gemischt Ganzzahligen Programmierung (Mixed Integer Programming, MIP) bestimmt werden.

Die Erfindung soll nun auf mathematische Weise genauer erläutert werden.

(I.) Bezeichnungen

In den nachfolgenden MIP-Formulierungen gelten die folgenden Bezeichnungen.

**Indices**

$C$      Menge der auf der Werkzeugmaschine 110 zu fertigenden Werkstücke 105

$T$      Menge aller Werkzeugstempel 140

$T_c$     Menge der Werkzeugstempel 140, die für den Typ $c$ von Werkstücken 105 benötigt werden

$MT$     Menge der neu zusammen zu stellenden Multitools 135 (sowohl Präge- als auch Stanz-Multitools 135)

$MT_c$    Menge der neuen Multitools 135, die für ein Werkstück 105 des Typs c verwendet werden können (Stanz-Multitools 135 können nur bei Materialdicken des Werkstücks 105 zwischen 0,8 und 1,5mm eingesetzt werden, während Präge-Multitools 135 bei allen Materialdicken eingesetzt werden können)

$T_{mt}$    Menge der Werkzeugstempel 140, die in Multitool 130 $mt$ eingesetzt werden dürfen (z.B. dürfen Stanzwerkzeuge 130 nur in Stanz-Multitools 135 eingesetzt werden und Prägewerkzeuge 130 nur in Prägemultitools 135)

$S$      Mögliche Schnittluft-Werte

$S_c$     Mögliche Schnittluft-Werte für Werkstücke 105 des Typs $c$

**Parameter**

$nBoards_c$     Anzahl der zu fertigenden Werkstücke 105 des Typs $c$

$nSetup_c$      Anzahl der Aufrüstungen des Typs c von Werkstücken 105

$linCap$       Kapazität des Linearmagazins 120 der gegebenen Werkzeugmaschine 110

$nTools_{mt}$    Anzahl der Werkzeuge 130, die in Multitool 130 $mt$ untergebracht werden können

$w_{Lin}$       Gewichtung des Ziels "Maximiere die Einsparungen an Linearmagazinwechsel"

$W_{Prep}$      Gewichtung des Ziels "Maximiere die Einsparungen an Werkzeugvorbereitungen"

**Binärvariablen**

$Assign_{t,s,mt}$     Variable, die angibt, ob ein Werkzeugstempel 140 $t$ mit der Schnittluft $s$ auf dem Multitool 135 $mt$ gerüstet wird. (In diesem Fall nimmt sie den Wert 1 an, anderenfalls den Wert 0)

$IsUsed_{c,mt}$      Variable, die angibt, ob für den Typ $c$ von Werkstücken 105 das Multitool 135 $mt$ eingesetzt wird. (In diesem Fall nimmt sie den Wert 1 an, anderenfalls den Wert 0)

$Process_{c,t,mt}$     Variable, die angibt, ob die Stanzoperationen, die für Werkstück 105 $c$ mit Werkzeugstempel 140 $t$ ausgeführt werden müssen, von Multitool 135 mt gemacht werden. (In diesem Fall nimmt sie den Wert 1 an, anderenfalls den Wert 0)

**Weitere Hilfsvariablen**

$NToolMTs_c$     Anzahl der Einzelwerkzeuge 130 in den Multitools 135, die für ein Werkstück 105 des Typs c verwendet werden

$SavedTools_c$    Anzahl der eingesparten physikalischen Werkzeuge 130, die bei der Produktion eines Typs $c$ von Werkstücken 105 benötigt werden

$NLinChanges_c$   Anzahl der Linearmagazinwechsel bei der Bearbeitung von Werkstücken des Typs $c$

$NToolPreps_c$    Anzahl der Werkzeugvorbereitungen bei der Bearbeitung von Werkstücken des Typs $c$

(II.) IP-Formulierung für das Modell mit eindeutigen Werkzeugstempel-Zuordnungen

In diesem Modell darf ein Werkzeugstempel 140 höchstens auf einem Multitool 135 gerüstet werden. Ist für ein Werkstück 105 ein Werkzeug 130 eines Multitools 135 verwendbar, so wird dieses Multitool 135 auch dafür verwendet.

$$\text{minimize} \sum_{c \in C} \left( w_{Lin} NLinChanges_c + w_{Prep} NToolPreps_c \right)$$

s.t.:

(1)
$$\sum_{t \in T} \sum_{s \in S} \text{Assign}_{t,s,mt} \leq \text{nTools}_{mt}$$
mt e $MT$

(2)
$$\sum_{t \in T_c} \sum_{s \in S_c} \text{Assign}_{t,s,mt} \leq \text{nTools}_{mt} \, \text{IsUsed}_{c,mt}$$
$c \in C$, mt $\in MT_c$

(3)
$$\sum_{mt \in MT} \sum_{s \in S} \text{Assign}_{t,s,mt} \leq 1$$
$t \in T$

(4)
$$NToolsInMTs_c = \sum_{mt \in MT_c} \sum_{t \in T_c} \sum_{s \in S_c} \text{Assign}_{t,s,mt}$$
$c \in C$

(5)
$$SavedTools_c = NToolsInMTs_c - \sum_{mt \in MT_c} \text{IsUsed}_{c,mt}$$
$c \in C$

(6)
$$NLinChange \, s_c \geq nBoards_c (|T_c| - SavedTools_c - \text{linCap})$$
$c \in C$

(7)
$$NTool\Pr eps_c = nSetup_c(|T_c| - NToolsInMTs_c)$$
$c \in C$

(8)
$\text{Assign}_{t,s,mt} = 0$
mt $\in MT$, s $\in S$, t $\in T \backslash T_{mt}$

(9)
$\text{IsUsed}_{c,mt} = 0$
$c \in C$, mt $\in MT \backslash MT_c$

$\text{Assign}_{t,s,mt} \in \{0,1\}$     $t \in T$, s $\in S$, mt $\in MT$

$\text{IsUsed}_{c,mt} \in \{0,1\}$     $c \in C$, mt $\in MT$

$NToolsInMTs_c \geq 0$     $c \in C$

$SavedTools_c \geq 0$     $c \in C$

$NLinChange \, s_c \geq 0$     $c \in C$

$NTool\Pr eps_c \geq 0$     $c \in C$

**Erläuterungen:**

Zu (1): An einem Multitool 135 mt darf höchstens die vorgegebene Anzahl an Einzelwerkzeugen 130 gerüstet werden. Gewöhnlich sind es 5 oder 10 Einzelwerkzeuge 130, je nach Typ des Multitools 135.

Zu (2): Ist an einem Multitool 135 mt ein Werkzeugstempel 140 t gerüstet, so wird das Multitool 135 für jedes hinsichtlich der Schnittluft mögliche Werkstück 105 eingesetzt, das diesen Werkzeugstempel 140 benötigt.

Zu (3): Ein Werkzeugstempel 140 darf höchstens an einem Multitool 135 gerüstet werden.

Zu (4): Pro Werkstück 105 bzw. Typ des Werkstücks 105 ist die Anzahl der verwendeten Werkzeuge 130 in den Multitools 135 die Summe aller in den Multitools 135 gerüsteten Werkzeuge 130 mit passendem Stempel 140 und passender Schnittluft.

Zu (5): Pro Werkstück 105 bzw. Typ des Werkstücks 105 entspricht die Einsparung an benötigten Werkzeugen 130 der Anzahl der in den Multitools 135 gerüsteten einsetzbaren Einzelwerkzeuge 130 (Werkzeugstempel 140 mit zulässiger Schnittluft) abzüglich der Anzahl der verwendeten Multitools 135.

Zu (6): Ist die Anzahl der für ein Werkstück 105 bzw. Typ des Werkstücks 105 benötigten Werkzeugstempel 140 (=$|T_c|$ - $SavedTools_c$) kleiner oder gleich der Kapazität des Linearmagazins 120, so gibt es keine Linearmagazinwechsel. Im anderen Fall ist die Anzahl an Linearmagazinwechsel die Differenz aus der Anzahl der benötigten Werkzeugstempel 140 und der Kapazität des Linearmagazins 120 multipliziert mit der Anzahl der zu fertigenden Stückzahl des Werkstücks 105.

Zu (7): Pro Werkstück 105 entspricht die Anzahl der Einzelwerkzeugvorbereitungen der Anzahl der benötigten Werkzeugstempel 140, die nicht in den Multitools 135 gerüstet sind, multipliziert mit der Anzahl der Aufrüstungen des Werkstücks 105. Diese letztgenannte Anzahl kann der Stückzahl der zu bearbeitenden Werkstücke 105 eines Auftrags 150 entsprechen.

Zu (8): Werkzeugstempel 140 dürfen nur auf für sie zulässigen Multitools 135 gerüstet werden. Beispiele: auf PrägeMultitools 135 dürfen nur Präge-Werkzeuge 130 gerüstet werden. Auf 10er Multitools 135 dürfen nur für 10er Multitools erlaubte Werkzeugstempel 140 gerüstet werden.

Zu (9): Multitools 135 dürfen nur für Werkstücke 105 eingesetzt werden, für die sie auch zulässig sind (vgl. die Definition von $MT_c$)

(III.) IP-Formulierung für das Modell in dem ein Werkzeugstempel an mehreren Multitools gerüstet werden darf

In diesem Modell besteht die Möglichkeit, zwei gleiche Werkzeuge 130 auf zwei verschiedene Multitools 135 zu rüsten. Dadurch lassen sich unter Umständen zusätzlich Linearmagazinwechsel einsparen.

Gibt es für ein Werkstück 105 ein benutzbares Werkzeug 130 auf einem Multitool, so wird auf jeden Fall eines der Multitools 135 verwendet. Es muss zusätzlich festgelegt werden, mit welchem Multitool 135 ein solches Werkstück 105 verwendet wird. Deshalb werden zusätzlich die $Process_{c,t,mt}$ -Variablen benötigt.

$$\text{minimize} \sum_{c \in C} (w_{Lin} NLinChanges_c + w_{Prep} NToolPreps_c)$$

s.t.:

$$\text{(1)} \qquad \sum_{t \in T} \sum_{s \in S} \text{Assign}_{t,s,mt} \le \text{nTools}_{mt} \qquad mt \in MT$$

$$\text{(2)} \qquad \sum_{s \in S_c} \text{Assign}_{t,s,mt} \ge \text{Process}_{c,t,mt} \qquad c \in C, t \in T_c, mt \in MT_c$$

$$\text{(3)} \qquad \sum_{t \in T_c} \text{Process}_{c,t,mt} \le |T_c| \, \text{IsUsed}_{c,mt} \qquad c \in C, mt \in MT_c$$

$$\text{(4)} \qquad \sum_{mt \in MT} \text{Process}_{c,t,mt} \le 1 \qquad c \in C, t \in T_c$$

$$\text{(5)} \qquad NToolsInMTs_c = \sum_{mt \in MT_c} \sum_{t \in T_c} \text{Process}_{c,t,mt} \qquad c \in C$$

$$\text{(6)} \qquad SavedTools_c = NToolsInMTs_c - \sum_{mt \in MT_c} \text{IsUsed}_{c,mt} \qquad c \in C$$

$$\text{(7)} \qquad NLinChanges_c \ge nBoards_c (|T_c| - SavedTools_c - linCap) \qquad c \in C$$

$$\text{(8)} \qquad NToolPreps_c = nSetups_c (|T_c| - NToolsInMTs_c) \qquad c \in C$$

| | | |
|---|---|---|
| (9) | $\text{Assign}_{t,s,mt} = 0$ | $mt \in MT, s \in S, t \in T \setminus T_{mt}$ |
| (10) | $\text{IsUsed}_{c,mt} = 0$ | $c \in C, mt \in MT \setminus MT_c$ |
| (11) | $\text{Process}_{c,t,mt} = 0$ | $c \in C, mt \in MT \setminus MT_c, t \in T_c \vee$ |
| | | $c \in C, mt \in MT_c, t \in T_c \setminus T_{mt}$, |

| | |
|---|---|
| $\text{Assign}_{t,s,mt} \in \{0,1\}$ | $t \in T, s \in S, mt \in MT$ |
| $\text{IsUsed}_{c,mt} \in \{0,1\}$ | $c \in C, mt \in MT$ |
| $\text{Process}_{c,t,mt} \in \{0,1\}$ | $c \in C, t \in T_c, mt \in MT$ |
| $NToolsInMTs_c \ge 0$ | $c \in C$ |
| $SavedTools_c \ge 0$ | $c \in C$ |
| $NLinChanges_c \ge 0$ | $c \in C$ |
| $NPreps_c \ge 0$ | $c \in C$ |

**Erläuterungen:**

Zu (1): An einem Multitool 135 mt darf nur eine begrenzte Anzahl an Werkzeugen 130 gerüstet werden, gewöhnlich sind es 5 oder 10 Werkzeuge 130, je nach Typ des Multitools 135.

Zu (2): Für einen vom Typ c von Werkstücken 105 benötigten Werkzeugstempel 140 t darf nur ein Multitool 135 mt verwendet werden, an dem ein Werkzeug 130 mit diesem Stempel 140 und mit zulässiger Schnittluft gerüstet ist.

Zu (3): Ein Multitool 135 mt wird für einen Typ c von Werkstücken 105 benutzt, wenn mindestens ein Werkzeug 130 des Multitools 135 für den Typ von Werkstücken 105 eingesetzt wird.

Zu (4): Die Operationen auf Typ c von Werkstücken 105, die mit dem Werkzeugstempel 140 t ausgeführt werden müssen, dürfen höchstens von einem Multitool 105 gemacht werden.

Zu (5): Pro Typ von Werkstücken 105 ist die Anzahl der verwendeten Werkzeuge 130 in den Multitools 135 die Summe aller in den Multitools 135 gerüsteten Werkzeuge 130 mit passendem Stempel 140 und passender Schnittluft.

Zu (6): Pro Typ von Werkstücken 105 entspricht die Einsparung an benötigten Werkzeugen 130 der Anzahl der in den Multitools 135 gerüsteten und dafür eingesetzten Einzelwerkzeuge 130 (Werkzeugstempel 140 mit zulässiger Schnittluft) abzüglich der Anzahl der verwendeten Multitools 135.

Zu (7) Ist die Anzahl der für einen Typ von Werkstücken 105 benötigten Werkzeugstempel 140 (= $|T_c|$ - SavedTools$_c$) kleiner oder gleich der Kapazität des Linearmagazins 120, so gibt es keine Linearmagazinwechsel. Im anderen Fall ist die Anzahl an Linearmagazinwechsel die Differenz aus der Anzahl der benötigten Werkzeugstempel 140 und der Kapazität des Linearmagazins 120, multipliziert mit der Anzahl der zu fertigenden Stückzahl des Typs von Werkstücken 105.

Zu (8): Pro Typ von Werkstücken 105 entspricht die Anzahl der Einzelwerkzeugvorbereitungen der Anzahl der benötigten Werkzeugstempel 140, die nicht in den Multitools 135 gerüstet sind, multipliziert mit der Anzahl der Aufrüstungen des Typs von Werkstücken 105.

Zu (9): Auf den Multitools 135 dürfen keine unzulässigen Werkzeugstempel 140 gerüstet werden. Beispiele: auf PrägeMultitools 135 dürfen nur Präge-Werkzeugstempel 140 gerüstet werden. Auf 10er Multitools 135 dürfen nur für 10er Multi-tools 135 erlaubte Werkzeugstempel 140 gerüstet werden.

Zu (10): Multitools 135 dürfen nicht für Typen von Werkstücken 105 eingesetzt werden, für die sie unzulässig sind (vgl. die Definition von MT$_c$)

Zu (11): Stanzoperationen, die für ein Werkstück 105 c mit Werkzeug 130 t ausgeführt werden müssen, können nicht von Multitool 135 mt ausgeführt werden, wenn das Werkzeug 130 am Multitool 135 mt nicht zulässig ist oder Multitool 135 mt für Werkstück 105 c prinzipiell nicht erlaubt ist.

(IV.) <u>3.2 Erweiterung: Berücksichtigung von bereits bestehenden Multitools</u>

Ein Anwendungsfall in der Praxis ist auch, dass bereits ein konfiguriertes Multitool 135 vorhanden ist und darüber hinaus zusätzliche eines oder mehrere neue Multitools 135 konfiguriert werden sollen. Beide vorangegangenen Modelle (vgl. II. und III.) lassen sich anpassen, um auch diesen Fall behandeln zu können.

Sind auf den bestehenden Multitools 135 Werkzeugstempel 140 nicht mehrfach gerüstet und will man am Einsatz der aktuellen Multitools 135 nichts ändern, d.h. sie für die Typen von Werkstücken 105, für die sie aktuell verwendet werden, weiterverwenden, so lässt sich das Modell aus Abschnitt 3.2 wie folgt erweitern:

- Die Menge der Multitools 135 besteht nun aus der Menge der bereits existierenden Multitools 135 und der neuen Multi-tools 135.
- Die Konfigurationen der bereits bestehenden Multitools 135 existieren bereits. Die Variablen $Assign_{t,s,mt}$ müssen für diese Multitools 135 in zusätzlichen Restriktionen auf die entsprechenden Werte gesetzt werden.

Im Modell aus Abschnitt III., in dem ein Werkzeugstempel 140 an mehreren Multitools 135 gerüstet werden darf, lassen sich ebenfalls bestehende Multitools 135 berücksichtigen. Will man Werkzeugstempel 140, die in bestehenden Multitools 135 gerüstet sind, auch auf neuen Multitools 135 erlauben, so muss das Modell wie folgt angepasst werden:

- Die Menge der Multitools 135 besteht nun aus der Menge der bereits existierenden Multitools 135 und der neuen Multi-tools 135.
- Die Konfigurationen der bereits konfigurierten Multitools 135 existieren bereits. Die Variablen $Assign_{t,s,mt}$ müssen für diese Multitools 135 in zusätzlichen Restriktionen auf die entsprechenden Werte gesetzt werden.
- Wenn gewünscht, kann der Einsatz von Werkzeugstempeln 140 von bestehenden Multitools 135 für Typen von Werkstücken 105 verboten werden, für die sie aktuell nicht eingesetzt werden. Die entsprechenden Process$_{c,t,mt}$ -Variablen müssen dann auf 0 gesetzt werden.
- Durch die folgende zusätzliche Zielfunktionskomponente werden die aktuellen Multitools 135 bevorzugt verwendet ($w_{small}$ ist dabei eine kleine positive reelle Zahl) :

$$- w_{small} \sum_{c \in C} \sum_{mt \in MT_{akt}} \sum_{t \in T_c} \text{Process}_{c,t,mt}$$

Somit werden nicht unnötigerweise Werkzeuge 130 aus neuen Multitools 135 verwendet und die Anzahl der zu ändernden Produktionsprogramme wird gering gehalten.

Ohne diese Zielfunktionskomponente könnte es zudem passieren, dass bei Werkstücken 105, bei denen bisher alte Multitools 135 eingesetzt wurden, gar keine Multitools 135 mehr eingesetzt werden. Wäre beispielsweise die Minimierung der Linearmagazinwechsel die alleinige Zielfunktion, so würden für Werkstücke, die weniger Werkzeuge 130 benötigen als Kapazität im Linearmagazin 120 vorhanden ist, auch die bisher benutzten alten Multitools 135 nicht mehr verwendet.

**Patentansprüche**

1. Verfahren zur Steuerung einer Werkzeugmaschine (110) mit einem ersten (120) und einem zweiten Werkzeugmagazin (125), wobei ein Werkzeug (130) zur Bearbeitung eines Werkstücks (105) vom ersten Werkzeugmagazin (120) aufgenommen werden kann und ein Werkzeug (130) aus dem zweiten Werkzeugmagazin (125) in das erste Werkzeugmagazin (120) übernommen werden kann, und wobei eines der Werkzeuge (130) ein Mehrfachwerkzeug (135) umfasst, das vor der Bearbeitung mit mehreren Werkzeugen (130) bestückbar ist, wobei das Verfahren folgende Schritte umfasst:

   - Erfassen von zu bearbeitenden Werkstücken (105);
   - Bestimmen von Werkzeugen (130), die zur Bearbeitung der erfassten Werkstücke (105) erforderlich sind;
   - Bestimmen von Werkzeugen (130), mit denen das Mehrfachwerkzeug (135) bestückt werden soll, **dadurch gekennzeichnet, dass** die Werkzeuge (130) derart bestimmt werden, dass über alle zu bearbeitenden Werkstücke (105) die gewichtete Summe $l * LC + w * TP$ minimiert ist,
   - wobei LC die Anzahl der für die Bearbeitung des Werkstücks (105) aus dem zweiten (125) ins erste Werkzeugmagazin (120) übernommenen Werkzeuge (130),
   - TP die Anzahl der für die Bearbeitung des Werkstücks (105) in einem der Werkzeugmagazine (120,25) aufzurüstenden Werkzeuge (130), und
   - l und w vorbestimmte Gewichtungsfaktoren sind.

2. Verfahren nach Anspruch 1, ferner umfassend den Schritt des Bearbeitens von erfassten Werkstücken (105) mittels der Werkzeugmaschine (110).

3. Verfahren nach Anspruch 2, wobei mehrere Mehrfachwerkzeuge (135) vorgesehen sind, mehrere gleiche Werkzeuge (130) auf verschiedenen Mehrfachwerkzeugen (135) gerüstet werden können und das Bearbeiten eines Werkstücks (105), das mit einem der gleichen Werkzeuge (130) bearbeitet werden soll, mit nur einem der gleichen Werkzeuge (130) erfolgt.

4. Verfahren nach Anspruch 1 oder 2, wobei mehrere Mehrfachwerkzeuge (135) vorgesehen sind und keine zwei gleichen Werkzeuge (130) in unterschiedlichen Mehrfachwerkzeugen (135) gerüstet werden.

5. Verfahren nach einem der vorangehenden Ansprüche, wobei die Werkzeuge (130) für die Mehrfachwerkzeuge (135) mittels Methoden der gemischt ganzzahligen Programmierung gebildet werden.

6. Verfahren nach einem der vorangehenden Ansprüche, wobei eine Menge von Mehrfachwerkzeugen (135) mit bereits gerüsteten Werkzeugen (130) berücksichtigt wird.

7. Computerprogrammprodukt mit Programmcodemitteln zur Durchführung des Verfahrens nach einem der vorangehenden Ansprüche, wenn es auf einer Ausführungseinrichtung (115) abläuft oder auf einem computerlesbaren Medium gespeichert ist.

8. Steuervorrichtung (115) für eine Werkzeugmaschine (110) mit einem Werkzeugmagazin (120, 125) für Werkzeuge (130), von denen die Werkzeugmaschine (110) jeweils eines zur Bearbeitung eines Werkstücks (105) aufnehmen kann, wobei die Steuervorrichtung (115) dazu eingerichtet ist, die Schritte des Verfahrens von Anspruch 1 durchzuführen.

9. Bearbeitungssystem (100), umfassend eine Werkzeugmaschine (110) mit einem Werkzeugmagazin (120, 125) für Werkzeuge (130), von denen die Werkzeugmaschine (110) jeweils eines zur Bearbeitung eines Werkstücks (105) aufnehmen kann, sowie eine Steuervorrichtung (115) nach Anspruch 8.

**Claims**

1. Method for controlling a machine tool (110) with a first (120) and a second tool magazine (125), wherein a tool (130) for machining a workpiece (105) can be collected from the first tool magazine (120) and a tool (130) can be transferred from the second tool magazine (125) into the first tool magazine (120), and wherein one of the tools (130) comprises a multi-tool (135), which can be equipped with a plurality of tools (130) prior to the machining, said method comprising the following steps:

   - identifying workpieces (105) to be machined;
   - determining tools (130) that are required for machining the identified workpieces (105);
   - determining tools (130) with which the multi-tool (135) is to be fitted,
   **characterized in that**
   the tools (130) are determined in such a way that the weighted sum $1 * LC + w * TP$ is minimized over all workpieces (105) to be machined,
   - where LC is the number of the tools (130) that are transferred from the second (125) into the first tool magazine (120) for machining the workpiece (105),
   - TP is the number of the tools (130) which are to be fitted in one of the tool magazines (120,25) for machining the workpiece (105), and
   - 1 and w are predetermined weighting factors.

2. Method according to Claim 1, further comprising the step of machining identified workpieces (105) by means of the machine tool (110).

3. Method according to Claim 2, wherein a plurality of multi-tools (135) is provided, a plurality of identical tools (130) can be fitted on different multi-tools (135) and the machining of a workpiece (105) which is to be machined with one of the identical tools (130) is performed with only one of the identical tools (130).

4. Method according to Claim 1 or 2, wherein a plurality of multi-tools (135) is provided and no two identical tools (130) are fitted in different multi-tools (135).

5. Method according to any of the preceding claims, wherein the tools (130) for the multi-tools (135) are formed using mixed integer programming methods.

6. Method according to any of the preceding claims, wherein a quantity of multi-tools (135) with already fitted tools (130) is taken into account.

7. Computer program product with program code means for carrying out the method according to any of the preceding claims, when it is running on an execution device (115) or is stored on a computer-readable medium.

8. Control device (115) for a machine tool (110) having a tool magazine (120, 125) for tools (130), of which the machine tool (110) can collect one at a time for machining a workpiece (105), wherein the control device (115) is configured to carry out the steps of the method of Claim 1.

9. Machining system (100), comprising a machine tool (110) having a tool magazine (120, 125) for tools (130), of which the machine tool (110) can collect one at a time for machining a workpiece (105), and a control device (115) according to Claim 8.

**Revendications**

1. Procédé de commande d'une machine à outils (110) comportant un premier (120) et un deuxième magasin à outils (125), dans lequel un outil (130) pour l'usinage d'une pièce (105) peut être repris par le premier magasin à outils (120) et un outil (130) peut être transféré du deuxième magasin à outils (125) vers le premier magasin à outils (120), l'un des outils (130) comportant un multi-outil (135) susceptible d'être équipé avec plusieurs outils (130) avant l'usinage, le procédé comportant les étapes suivantes :

- détection de pièces à usiner (105) ;
- détermination d'outils (130) nécessaires à l'usinage des pièces détectées (105) ;
- détermination d'outils (130) dont le multi-outil (135) doit être équipé,
**caractérisé en ce que** les outils (130) sont déterminés de façon à ce que la somme pondérée 1 * LC + w * TP sur toutes les pièces à usiner (105) soit minimisée,
- LC étant le nombre des outils (130) transférés depuis le deuxième magasin à outils (125) au premier magasin à outils (120) pour l'usinage de la pièce (105),
- TP étant le nombre des outils (130) à monter dans un des magasins à outils (120, 25) pour l'usinage de la pièce (105), et
- l et w étant des facteurs de pondération prédéfinis.

2. Procédé selon la revendication 1, comportant par ailleurs l'étape d'usinage de pièces détectées (105) par la machine-outil (110).

3. Procédé selon la revendication 2, dans lequel plusieurs multi-outils (135) sont prévus, plusieurs outils identiques (130) pouvant être montés sur différents multi-outils (135) et l'usinage d'une pièce (105) devant être usiné par un des outils identiques (130) se fait grâce à un seul des outils identiques (130).

4. Procédé selon la revendication 1 ou 2, dans lequel plusieurs multi-outils (135) sont prévus et il n'y a pas deux outils identiques (130) équipant les différents multi-outils (135).

5. Procédé selon l'une des revendications précédentes, dans lequel les outils (130) prévus d'équiper les multi-outils (135) sont constitués grâce à des procédés de la programmation mixte à nombres entiers.

6. Procédé selon l'une des revendications précédentes, dans lequel une quantité de multi-outils (135) à outils déjà montés (130) est prise en compte.

7. Produit de programme informatique comportant des moyens de codage de programme pour la réalisation du procédé selon une des revendications précédentes, lorsqu'il se déroule sur un moyen d'exécution (115) ou qu'il est stocké dans un support lisible par ordinateur.

8. Unité de commande (115) relative à une machine à outils (110), comportant un magasin à outils (120, 125) pour des outils (130) dont la machine à outils (110) peut accueillir un chacun pour l'usinage d'une pièce (105), l'unité de commande (115) étant conçue pour mettre en œuvre les étapes du procédé selon la revendication 1.

9. Système d'usinage (100), comportant une machine-outil (110) comportant un magasin à outils (120, 125) pour des outils (130) dont la machine-outil (110) peut accueillir un chacun pour l'usinage d'une pièce (105), ainsi qu'une unité de commande (115) selon la revendication 8.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AVCI S et al.** Tool Magazine Arrangement And Operations Sequencing On CNC Machines. *European Journal of Engineering Education,* vol. 23 (11), 1069-1081